(19) Europäisches Patentamt / European Patent Office / Office européen des brevets

(11) **EP 4 441 611 B1**

(12) **FASCICULE DE BREVET EUROPEEN**

(45) Date de publication et mention de la délivrance du brevet:
**26.11.2025 Bulletin 2025/48**

(21) Numéro de dépôt: **22813643.8**

(22) Date de dépôt: **20.10.2022**

(51) Classification Internationale des Brevets (IPC):
**G06F 11/34** *(2006.01)* **G06F 11/30** *(2006.01)*

(52) Classification Coopérative des Brevets (CPC):
**G06F 11/3423; G06F 11/3013; G06F 11/3055;**
G06F 2201/805; G06F 2201/88

(86) Numéro de dépôt international:
**PCT/FR2022/051987**

(87) Numéro de publication internationale:
**WO 2023/099825 (08.06.2023 Gazette 2023/23)**

(54) **DÉTERMINATION À DISTANCE D'UN NOMBRE DE RÉVEILS DE CALCULATEURS D'UN VÉHICULE AUTOMOBILE**

FERNBESTIMMUNG DER ANZAHL DER AUFWECKUNGEN FÜR KRAFTFAHRZEUGCOMPUTER

REMOTE DETERMINATION OF NUMBER OF WAKE-UPS FOR MOTOR VEHICLE COMPUTERS

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **30.11.2021 FR 2112721**

(43) Date de publication de la demande:
**09.10.2024 Bulletin 2024/41**

(73) Titulaire: **Stellantis Auto SAS**
**78300 Poissy (FR)**

(72) Inventeurs:
• **RAMOS DOS SANTOS, Graziele**
**92140 CLAMART (FR)**
• **PETIT, Benjamin**
**92500 RUEIL MALMAISON (FR)**

(74) Mandataire: **ESIP**
**Stellantis Auto SAS**
**Service REIP - YT800**
**43, rue Jean Pierre Timbaud**
**78300 Poissy (FR)**

(56) Documents cités:
**US-A1- 2015 346 797**

• **HOANG PHUONG HUU ET AL: "An Online Degradation Forecasting and Abatement Framework for Hybrid Electric Vehicles", vol. 1, 13 April 2021 (2021-04-13), US, XP055926431, ISSN: 0148-7191, Retrieved from the Internet <URL:http://dx.doi.org/10.4271/2021-01-0161> [retrieved on 20220531], DOI: 10.4271/ 2021-01-0161**

## Description

La présente invention appartient au domaine de la supervision à distance de l'électronique embarquée dans un véhicule terrestre à moteur. En particulier, il concerne la détermination à distance de durées de fonctionnement de calculateurs du véhicule.

On entend par « véhicule terrestre à moteur » tout type de véhicule tel qu'un véhicule automobile, un cyclomoteur, une motocyclette, un robot de stockage dans un entrepôt, etc.

On entend par « calculateur » tout type de dispositif ou composant électronique susceptible de traiter une requête. Un calculateur de fermeture de portière, un activateur d'essuie-glace, un processeur centralisant les calculs de conduite autonome ou encore un boitier télématique, ou encore unité de contrôle télématique TCU pour Telematic Control Unit en anglais sont des exemples de calculateurs.

Les calculateurs actuels des véhicules sont peu sollicités en comparaison à la durée de vie du véhicule.

D'une part, le nombre de services qui peut être effectué sur le véhicule est réduit à des fonctions basiques (ouverture à distance ou allumage des phares à distance par exemple).

D'autre part, les contraintes physiques imposées aux composants sont courtes car limitées aux phases de fonctionnement du véhicule. Par exemple, un véhicule thermique ne fait subir à ses composants des contraintes thermiques que lorsque son moteur tourne, à la différence d'un véhicule électrique dont les batteries vont chauffer lors du fonctionnement (décharge) mais également lors de la recharge des batteries.

Cette situation change et le nombre de services qui pourront être mis en œuvre par le véhicule va fortement augmenter (mise à jour à distance, remontée permanente de données, conduite autonome, recharge à distance, etc.). De même, les véhicules électriques impacteront plus la durée de vie des calculateurs électroniques.

De nombreux calculateurs ne sont pas adaptés à ces nouvelles contraintes. Par exemple, ils sont définis pour un fonctionnement normal (hors multiplication des services et électrification) de 15 ans ou 240 000 km et risque donc d'être défaillant bien avant s'ils sont surutilisés.

Il existe donc un besoin pour de supervision du fonctionnement des calculateurs du véhicule, sur tout le cycle de vie des calculateurs du véhicule, pour prévenir des défaillance de ces calculateurs.

En outre, l'état de la technique est connu du document US2015346797A1 et du document « An Online Degradation Forecasting and Abatement Framework for Hybrid Electric Vehicles », Hoang Phuong et Al. , SAE 2010 Commercial Vehicle Enguneering Congress SAE Technical Papers, vol.1, 13 avril 2021, ISSN : 0148-7191, DOI : 10.4271/2021-01-0161, URL : http://dx.doi.org/104271/2021-01-0161.

La présente invention vient améliorer la situation.

A cet effet un premier aspect de l'invention concerne un procédé de supervision par un serveur distant d'une pluralité de calculateurs électroniques, le procédé comportant au niveau du serveur distant les étapes de :

- interception d'une requête de réveil à destination d'au moins un calculateur électronique de la pluralité de calculateurs électroniques ;
- caractérisé en ce que, les calculateurs électroniques étant compris sur un véhicule terrestre à moteur, le procédé comprend les étapes de :
- horodatage de ladite requête de réveil à destination du calculateur ;
- identification du calculateur électronique parmi la pluralité de calculateurs ;
- extraction d'une information de durée de fonctionnement théorique du calculateur après réveil pour ladite requête ;
- extraction d'une information d'horodatage de la requête de réveil précédant ladite requête de réveil ;
- calcul d'un temps écoulé entre la requête de réveil et la requête de réveil précédente ;
- comparaison de l'information de durée de fonctionnement théorique du calculateur après réveil au temps écoulé entre la requête de réveil et la requête de réveil précédente ;
- si la durée de fonctionnement théorique du calculateur après réveil est inférieure au temps écoulé entre la requête de réveil et la requête de réveil précédente, incrémentation d'un compteur de réveil pour le calculateur identifié.

En rendant possible la détermination du nombre de réveils des calculateurs du véhicule, une supervision efficace du fonctionnement des calculateurs est mise en place et rend ainsi possible une maintenance prédictive de ces calculateurs.

En particulier, chaque réveil de calculateur occasionne généralement une sollicitation importante de tous les composants électronique du calculateur et il est donc particulièrement pertinent de suivre le nombre de réveils subi par un calculateur.

Un effet technique spécifique au procédé selon le premier aspect de l'invention est qu'il ne nécessite aucune ressource au niveau du véhicule. En effet, toutes les étapes sont effectuées au niveau du serveur distant, sans aucune requête à destination du véhicule.

Le procédé peut donc être mise en œuvre sur une flotte de véhicule donnée sans qu'il soit nécessaire d'intervenir physiquement (mise à jour logicielle par exemple) sur le véhicule. Il peut en outre être mis en œuvre sur des véhicules aux capacités de connexion réduites, tels que des véhicules ne pouvant que recevoir des données sans en envoyer.

Dans un mode de réalisation, le procédé comporte en outre les étapes de :

- extraction d'un nombre de réveil maximum théorique pour le calculateur identifié ;
- comparaison de la valeur du compteur de réveil pour le calculateur identifiée obtenue après incrémentation au nombre de réveil maximum théorique pour le calculateur identifié ;
- si le compteur de réveil du calculateur identifié est supérieur au nombre maximum de réveil, transmission d'une alerte à destination du véhicule terrestre à moteur.

Ainsi, un utilisateur du véhicule peut rapidement être prévenu et ainsi anticiper une défaillance du calculateur, susceptible d'entraîner d'autres défaillances pour d'autres organes du véhicule.

Un deuxième aspect de l'invention concerne un programme informatique comportant des instructions pour la mise en œuvre du procédé selon le premier aspect de l'invention, lorsque ces instructions sont exécutées par un processeur.

Un troisième aspect de l'invention concerne un dispositif compris sur un serveur distant de supervision d'une pluralité de calculateurs électroniques compris sur un véhicule terrestre à moteur, le dispositif comportant au moins un processeur et au moins une mémoire agencées pour effectuer les opérations de :

- interception d'une requête de réveil à destination d'au moins un calculateur électronique de la pluralité de calculateurs électroniques ;
- horodatage de ladite requête de réveil à destination du calculateur ;
- identification du calculateur électronique parmi la pluralité de calculateurs ;
- extraction d'une information de durée de fonctionnement théorique du calculateur après réveil pour ladite requête ;
- extraction d'une information d'horodatage de la requête de réveil précédant ladite requête de réveil ;
- calcul d'un temps écoulé entre la requête de réveil et la requête de réveil précédente
- comparaison de l'information de durée de fonctionnement théorique du calculateur après réveil au temps écoulé entre la requête de réveil et la requête de réveil précédente ;
- si la durée de fonctionnement théorique du calculateur après réveil est inférieure au temps écoulé entre la requête de réveil et la requête de réveil précédente, incrémentation d'un compteur de réveil pour le calculateur identifié.

Dans un mode de réalisation du troisième aspect de l'invention, le processeur et la mémoire sont en outre agencées pour effectuer les opérations de :

- extraction d'un nombre de réveil maximum théorique pour le calculateur identifié ;
- comparaison de la valeur du compteur de réveil pour le calculateur identifiée obtenue après incrémentation au nombre de réveil maximum théorique pour le calculateur identifié ;
- si le compteur de réveil du calculateur identifié est supérieur au nombre maximum de réveil, transmission d'une alerte à destination du véhicule terrestre à moteur.

Un quatrième aspect de l'invention concerne un serveur distant configuré pour comprendre le dispositif selon le troisième aspect de l'invention.

D'autres caractéristiques et avantages de l'invention apparaîtront à l'examen de la description détaillée ci-après, et des dessins annexés sur lesquels :

[Fig 1] est un diagramme illustrant les étapes d'un procédé selon un mode de réalisation de l'invention ;

[Fig 2] illustre la structure d'un dispositif selon un mode de réalisation de l'invention.

L'invention est décrite ci-après dans son application, non limitative, au cas d'un véhicule automobile. D'autres applications sont naturellement envisageables pour la présente invention. Par exemple, le procédé selon l'invention peut être mis en œuvre pour une motocyclette ou encore par une trottinette électrique.

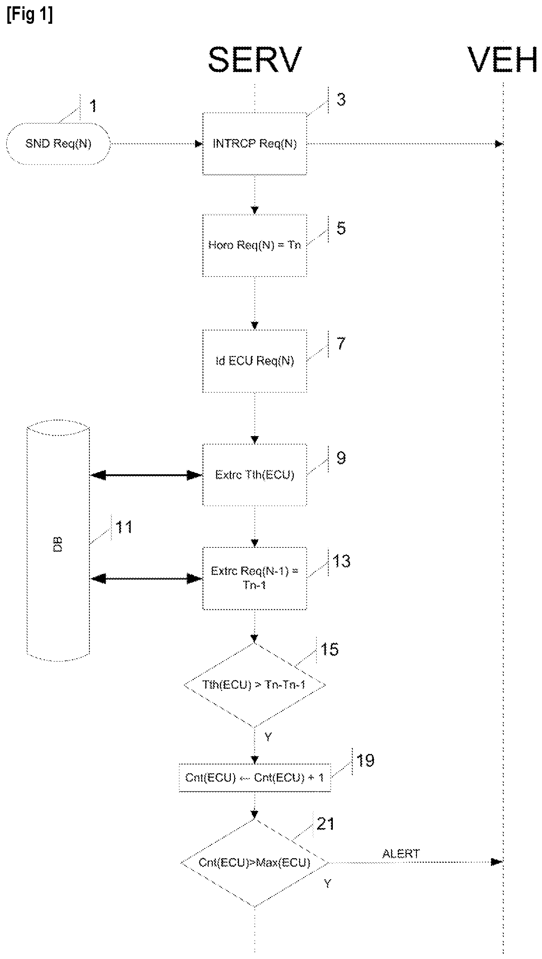

La figure 1 illustre un procédé selon un mode de réalisation de l'invention.

En particulier, les étapes sont mises en œuvre par un serveur distant SERV pour une requête Req(N) à destination d'un calculateur ECU du véhicule automobile VEH, le véhicule VEH comportant une pluralité de calculateurs.

La requête Req(N) est générée à une étape 1. La requête peut-être émise directement par SERV, simplement transiter par SERV en ayant été générée par un service tiers ou être générée par SERV à l'initiative d'un utilisateur du véhicule. Par exemple, un utilisateur peut demander via son téléphone intelligent, ou smartphone en anglais, le pré-conditionnement thermique de son véhicule. La requête de l'utilisateur est reçue par le serveur depuis le smartphone et la requête Req(N) est alors générée par le serveur pour être transmise à un calculateur ECU du véhicule en charge de la gestion thermique (climatisation, chauffage).

A une étape 3, Req(N) est intercepté par le serveur. On entend ici par intercepter le fait que le service logiciel en charge de l'exécution du procédé selon l'invention récupère Req(N). Ainsi, si le serveur a généré Req(N), il s'agira d'une interception purement virtuelle, le code source du procédé selon l'invention appelant Req(N) qui est déjà disponible, par exemple dans un autre service logiciel, au sein du serveur.

A une étape 5, un horodatage de ladite requête de réveil à destination du calculateur est mis en œuvre pour l'obtention de l'horodate Tn.

A une étape 7, une identification du calculateur électronique ECU parmi la pluralité de calculateurs est mise en œuvre. L'identification est faite par analyse de la requête, l'information du calculateur destinataire pouvant être comprise dans une entête de la requête ou dans les données utiles de cette requête.

A une étape 9, une extraction d'une information Tth(ECU) de durée de fonctionnement théorique du calculateur pour ladite requête après réveil est mise en œuvre. Pour ce faire, une requête peut-être émise vers une base de données 11, intégrée ou à distance du serveur SERV, stockant pour chaque calculateur et pour chaque requête au moins une durée de fonctionnement théorique.

Dans un mode de réalisation, plusieurs durées de fonctionnement théorique sont présentes pour chaque calculateur, chacune étant spécifique à un type de requête, et la bonne durée est choisie à partir d'une analyse de Req(N).

Dans un mode de réalisation, la requête concerne plusieurs ECUs et les étapes suivantes sont alors mises en œuvre pour chaque ECU, chaque ECU voyant ainsi son compteur de réveil Cnt(ECU) (voir ci-après en référence à une étape 15) incrémenté.

A une étape 13, une extraction d'une information d'horodatage d'une requête Req(N-1) de réveil précédant ladite requête Req(N) de réveil est mise en œuvre. On entend par « requête de réveil précédant ladite requête » la dernière requête de réveil de l'ECU envoyée à l'ECU avant la requête Req(N), par le serveur SERV ou non.

Ici également, une requête peut-être émise vers la base de données 11, ou une autre base de données au moins reliée au serveur SERV, stockant pour chaque calculateur au moins une précédente requête de réveil de ce calculateur.

A une étape de test 15, une comparaison de l'information Tth(ECU) de durée de fonctionnement théorique du calculateur après réveil au temps $T_n - T_{n-1}$ écoulé entre la requête de réveil et la requête de réveil précédente est mise en œuvre.

Si la durée de fonctionnement théorique du calculateur après réveil est inférieure au temps écoulé entre la requête de réveil et la requête de réveil précédente, un compteur de réveil Cnt(ECU) pour le calculateur identifié est incrémenté (un réveil en plus) à une étape 19. Cela signifie en effet que l'ECU n'a pas eu le temps de s'endormir et n'a donc pas eu à se réveiller.

Si la durée de fonctionnement théorique du calculateur après réveil est supérieure au temps écoulé entre la requête de réveil et la requête de réveil précédente, le calculateur n'a pas eu à se réveiller et le compteur n'est donc pas incrémenté.

Dans un mode de réalisation, le procédé comporte en outre les étapes de :

- extraction d'un nombre Max(ECU) de réveil maximum théorique pour le calculateur identifié ;
- comparaison de la valeur Cnt(ECU) du compteur de réveil pour le calculateur identifiée obtenue après incrémentation au nombre Max(ECU) de réveil maximum théorique pour le calculateur identifié à une étape test 21 ;
- si le compteur de réveil du calculateur identifié est supérieur au nombre maximum de réveil, transmission d'une alerte ALERT à destination du véhicule terrestre à moteur. Sinon, aucune alerte n'est transmise.

Dans un mode de réalisation de détermination d'une durée (non représenté), une détermination pour le calculateur ECU identifié d'une durée de fonctionnement D(N) du calculateur entre ladite requête de réveil et la requête de réveil antérieure est mise en œuvre. Pour ce faire, la durée de fonctionnement est déterminée à partir :

○ d'un calcul Tn-Tn-1 du temps écoulé entre ladite requête de réveil et la requête de réveil antérieure ;
○ de l'information Tth(ECU) de durée de fonctionnement théorique du calculateur après réveil.

En particulier, dans un mode de réalisation, la durée de fonctionnement du calculateur entre ladite requête de réveil et la requête de réveil antérieure est :

○ le temps écoulé entre ladite requête de réveil et la requête de réveil antérieure si ledit temps écoulé est inférieur à la durée de fonctionnement théorique du calculateur après réveil ;
○ la durée de fonctionnement théorique du calculateur après réveil si la durée de fonctionnement théorique du calculateur après réveil est inférieure au temps écoulé entre ladite requête de réveil et la requête de réveil antérieure.

$$\text{Soit } D(N) = \min\{T_n - T_{n-1}\,;\ T_{th}(\text{ECU})\}$$

Dans le mode de réalisation de détermination d'une durée, la durée D(N) de réveil estimée de ECU à l'horodate Tn est transmise à une base de données de supervision de l'usage des calculateurs du véhicule. Dans un mode de réalisation, si D(N) excède une durée maximum prédéterminée par ECU, une alerte peut être transmise à destination de l'utilisateur du véhicule (directement dans le véhicule ou sur le smartphone de l'utilisateur).

Dans un mode de réalisation particulier du mode de réalisation de détermination d'une durée, la durée D(N) peut également prendre en compte la durée d'activité sur l'ECU de la présente requête Req(N). Il faudra alors retrancher ladite durée de la présente requête lors du comptage prochain D(N+1) pour ne pas compter cette durée deux fois.

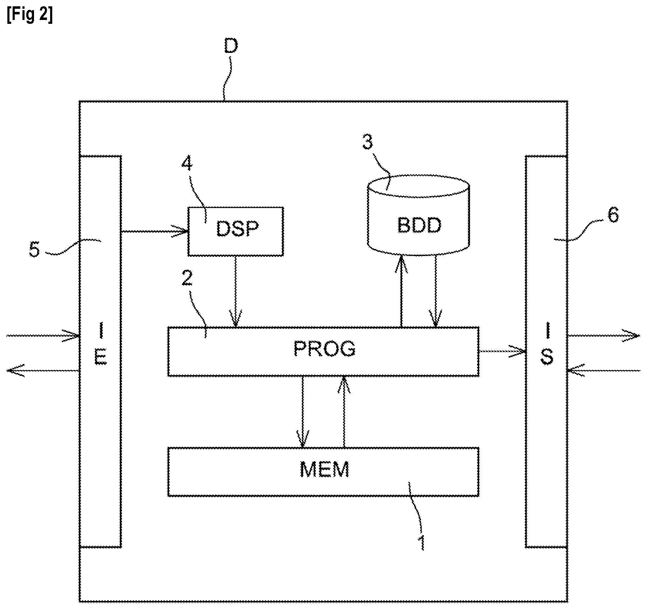

La figure 2 représente un exemple de dispositif D dans le serveur SRVR. Ce dispositif D peut être utilisé en tant que dispositif centralisé en charge d'au moins certaines étapes du procédé décrit ci-avant en référence à la figure 1. Dans un mode de réalisation, il correspond à un sous-dispositif compris dans le serveur SRVR.

Ce dispositif D peut prendre la forme d'un boitier comprenant des circuits imprimés, de tout type d'ordinateur ou encore d'un smartphone.

Le dispositif D comprend une mémoire vive 1 pour stocker des instructions pour la mise en œuvre par un processeur 2 d'au moins une étape des procédés tels que décrits ci-avant. Le dispositif comporte aussi une mémoire de masse 3 pour le stockage de données destinées à être conservées après la mise en œuvre du procédé.

Le dispositif D peut en outre comporter un processeur de signal numérique (DSP) 4. Ce DSP 4 reçoit des données pour mettre en forme, démoduler et amplifier, de façon connue en soi ces données.

Le dispositif comporte également une interface d'entrée 5 pour la réception des données mises en œuvre par le procédé selon l'invention et une interface de sortie 6 pour la transmission des données mises en œuvre par le procédé.

La présente invention ne se limite pas aux formes de réalisation décrites ci-avant à titre d'exemples ; elle s'étend à d'autres variantes.

Ainsi, il a été décrit un mode de réalisation dans lequel une requête de pré conditionnement thermique pour un véhicule automobile était envoyée. La présente invention est également applicable à d'autres requêtes (charge à distance, mise à jour à distance, récupération de données de pression de pneus, etc.) pour d'autres véhicules (trottinettes, train, etc.).

**Revendications**

**1.** Procédé de supervision par un serveur (SERV) distant d'une pluralité de calculateurs électroniques le procédé comportant au niveau du serveur distant les étapes de :

- interception (3) d'une requête de réveil à destination d'au moins un calculateur électronique de la pluralité de calculateurs électroniques ;

**caractérisé en ce que**, les calculateurs électroniques étant compris sur un véhicule terrestre à moteur (VEH), le procédé comprend les étapes de :

- horodatage (5) de ladite requête de réveil à destination du calculateur ;
- identification (7) du calculateur électronique parmi la pluralité de calculateurs ;
- extraction (9) d'une information de durée de fonctionnement théorique du calculateur après réveil pour ladite requête ;
- extraction (13) d'une information d'horodatage de la requête de réveil précédant ladite requête de réveil ;
- calcul (13) d'un temps écoulé entre la requête de réveil et la requête de réveil précédente ;
- comparaison (15) de l'information de durée de fonctionnement théorique du calculateur après réveil au temps écoulé entre la requête de réveil et la requête de réveil précédente ;
- si la durée de fonctionnement théorique du calculateur après réveil est inférieure au temps écoulé entre la requête de réveil et la requête de réveil précédente, incrémentation (19) d'un compteur de réveil pour le calculateur identifié.

**2.** Procédé selon la revendication 1, comportant en outre les étapes de :

- extraction d'un nombre de réveil maximum théorique pour le calculateur identifié ;
- comparaison (21) de la valeur du compteur de réveil pour le calculateur identifiée obtenue après incrémentation au nombre de réveil maximum théorique pour le calculateur identifié ;

- si le compteur de réveil du calculateur identifié est supérieur au nombre maximum de réveil, transmission d'une alerte à destination du véhicule terrestre à moteur.

3. Programme informatique comportant des instructions pour la mise en œuvre du procédé selon l'une quelconque des revendications précédentes, lorsque ces instructions sont exécutées par un processeur (2).

4. Dispositif (D) compris sur un serveur distant de supervision d'une pluralité de calculateurs électroniques compris sur un véhicule terrestre à moteur, le dispositif comportant au moins un processeur et au moins une mémoire agencées pour effectuer les opérations de :

   - interception d'une requête de réveil à destination d'au moins un calculateur électronique de la pluralité de calculateurs électroniques ;
   - horodatage de ladite requête de réveil à destination du calculateur ;
   - identification du calculateur électronique parmi la pluralité de calculateurs ;
   - extraction d'une information de durée de fonctionnement théorique du calculateur après réveil pour ladite requête ;
   - extraction d'une information d'horodatage de la requête de réveil précédant ladite requête de réveil ;
   - calcul d'un temps écoulé entre la requête de réveil et la requête de réveil précédente
   - comparaison de l'information de durée de fonctionnement théorique du calculateur après réveil au temps écoulé entre la requête de réveil et la requête de réveil précédente ;
   - si la durée de fonctionnement théorique du calculateur après réveil est inférieure au temps écoulé entre la requête de réveil et la requête de réveil précédente, incrémentation d'un compteur de réveil pour le calculateur identifié.

5. Dispositif de supervision selon la revendication 4, dans lequel la processeur et la mémoire sont en outre agencées pour effectuer les opérations de :

   - extraction d'un nombre de réveil maximum théorique pour le calculateur identifié ;
   - comparaison de la valeur du compteur de réveil pour le calculateur identifiée obtenue après incrémentation au nombre de réveil maximum théorique pour le calculateur identifié ;
   - si le compteur de réveil du calculateur identifié est supérieur au nombre maximum de réveil, transmission d'une alerte à destination du véhicule terrestre à moteur.

6. Serveur distant configuré pour comprendre le dispositif selon la revendication 4 ou 5.

**Patentansprüche**

1. Verfahren zum Überwachen einer Vielzahl elektronischer Computer durch einen Remote-Server (SERV), wobei das Verfahren auf der Ebene des Remote-Servers die folgenden Schritte umfasst:

   - Abfangen (3) einer Weckanforderung an mindestens einen elektronischen Rechner der Vielzahl von elektronischen Rechnern;

   **dadurch gekennzeichnet, dass** die elektronischen Computer in einem Landkraftfahrzeug (LMV) enthalten sind und das Verfahren die folgenden Schritte umfasst:

   - Zeitstempel (5) der Weckanforderung an den Computer;
   - Identifizierung (7) des elektronischen Rechners unter der Vielzahl von Rechnern;
   - Extraktion (9) von Informationen über die theoretische Betriebszeit des Computers nach dem Aufwachen für die genannte Anforderung;
   - Extrahieren (13) von Zeitstempelinformationen aus der Weckanforderung, die dieser Weckanforderung vorausgeht;
   - Berechnen (13) einer zwischen der Weckanforderung und der vorherigen Weckanforderung verstrichenen Zeit;
   - Vergleich (15) der Angaben zur theoretischen Betriebszeit des Rechners nach dem Aufwachen mit der zwischen der Aufweckanforderung und der vorherigen Aufweckanforderung verstrichenen Zeit;
   - wenn die theoretische Betriebszeit des Computers nach dem Aufwachen kürzer ist als die zwischen der Aufweckanforderung und der vorherigen Aufweckanforderung vergangene Zeit, Inkrementieren (19) eines Aufweckzählers für den identifizierten Computer.

2. Das Verfahren nach Anspruch 1, das weiterhin die folgenden Schritte umfasst:

- Extraktion einer theoretischen Maximalzahl von Aufwachvorgängen für den identifizierten Computer;
- Vergleichen (21) des nach Inkrementieren erhaltenen Wertes des Weckzählers für den identifizierten Computer mit der theoretischen Maximalzahl von Weckvorgängen für den identifizierten Computer;
- wenn der Weckzähler des identifizierten Rechners größer ist als die maximale Anzahl an Weckvorgängen, Übermittlung einer Warnung an das Kraftfahrzeug.

3. Computerprogramm mit Anweisungen zum Implementieren des Verfahrens nach einem der vorhergehenden Ansprüche, wenn diese Anweisungen von einem Prozessor (2) ausgeführt werden.

4. Vorrichtung (D) zur Überwachung einer Vielzahl von elektronischen Computern, die in einem Landkraftfahrzeug enthalten sind, wobei die Vorrichtung mindestens einen Prozessor und mindestens einen Speicher umfasst, die zur Ausführung der folgenden Operationen eingerichtet sind:

- Abfangen einer Weckanforderung an mindestens einen elektronischen Computer der Vielzahl von elektronischen Computern;
- Zeitstempel der Weckanforderung an den Computer;
- Identifizierung des elektronischen Rechners unter der Vielzahl von Rechnern;
- Extraktion von Informationen über die theoretische Betriebszeit des Computers nach dem Aufwachen für die besagte Anforderung;
- Extrahieren einer Zeitstempelinformation aus der Weckanforderung, die der Weckanforderung vorausgeht;
- Berechnen einer verstrichenen Zeit zwischen der Weckanforderung und der vorherigen Weckanforderung;
- Vergleich der theoretischen Betriebszeitinformationen des Computers nach dem Aufwachen mit der zwischen der Aufweckanforderung und der vorherigen Aufweckanforderung verstrichenen Zeit;
- wenn die theoretische Betriebszeit des Computers nach dem Aufwachen geringer ist als die zwischen der Aufweckanforderung und der vorherigen Aufweckanforderung vergangene Zeit, Inkrementieren eines Aufweckzählers für den identifizierten Computer.

5. Überwachungsgerät nach Anspruch 4, bei dem der Prozessor und der Speicher außerdem dazu eingerichtet sind, die folgenden Operationen auszuführen:

- Extraktion einer theoretischen Maximalzahl von Aufwachvorgängen für den identifizierten Computer;
- Vergleich des nach der Inkrementierung erhaltenen Weckzählerwerts für den identifizierten Computer mit der theoretisch maximalen Weckanzahl für den identifizierten Computer;
- wenn der Weckzähler des identifizierten Rechners größer ist als die maximale Anzahl an Weckvorgängen, Übermittlung einer Warnung an das Kraftfahrzeug.

6. Ein Remote-Server, der so konfiguriert ist, dass er das Gerät nach Anspruch 4 oder 5 umfasst.


**Claims**

1. Method of monitoring by a remote server (SERV) a plurality of electronic computers, the method comprising at the level of the remote server the steps of:

- interception (3) of a wake-up request to at least one electronic computer of the plurality of electronic computers;

**characterized in that**, the electronic computers being included on a land motor vehicle (LMV), the method comprises the steps of:

- timestamp (5) of said wake-up request to the computer;
- identification (7) of the electronic calculator among the plurality of calculators;
- extraction (9) of information on the theoretical operating time of the computer after waking up for said request;
- extraction (13) of timestamp information from the wake-up request preceding said wake-up request;
- calculating (13) an elapsed time between the wake-up request and the previous wake-up request;

- comparison (15) of the information on the theoretical operating time of the computer after waking up with the time elapsed between the wake-up request and the previous wake-up request;
- if the theoretical operating time of the computer after waking up is less than the time elapsed between the wake-up request and the previous wake-up request, incrementing (19) a wake-up counter for the identified computer.

2. The method of claim 1, further comprising the steps of:

- extraction of a theoretical maximum number of wake-ups for the identified computer;
- comparison (21) of the value of the wake-up counter for the identified computer obtained after incrementation to the theoretical maximum number of wake-ups for the identified computer;
- if the wake-up counter of the identified calculator is greater than the maximum number of wake-ups, transmission of an alert to the motor vehicle.

3. Computer program comprising instructions for implementing the method according to any one of the preceding claims, when these instructions are executed by a processor (2).

4. Device (D) included on a remote server for supervising a plurality of electronic computers included on a land motor vehicle, the device comprising at least one processor and at least one memory arranged to carry out the operations of:

- interception of a wake-up request to at least one electronic computer of the plurality of electronic computers;
- timestamp of said wake-up request to the computer;
- identification of the electronic calculator among the plurality of calculators;
- extraction of information on the theoretical operating time of the computer after waking up for said request;
- extracting a timestamp information from the wake-up request preceding said wake-up request;
- calculating an elapsed time between the wake-up request and the previous wake-up request;
- comparison of the theoretical operating time information of the computer after waking up with the time elapsed between the wake-up request and the previous wake-up request;
- if the theoretical operating time of the computer after waking up is less than the time elapsed between the wake-up request and the previous wake-up request, incrementation of a wake-up counter for the identified computer.

5. Supervisory device according to claim 4, in which the processor and the memory are further arranged to carry out the operations of:

- extraction of a theoretical maximum number of wake-ups for the identified computer;
- comparison of the wake-up counter value for the identified computer obtained after incrementation to the theoretical maximum wake-up number for the identified computer;
- if the wake-up counter of the identified calculator is greater than the maximum number of wake-ups, transmission of an alert to the motor vehicle.

6. A remote server configured to comprise the device of claim 4 or 5.

EP 4 441 611 B1

[Fig 1]

SERV                    VEH

SND Req(N) — 1

INTRCP Req(N) — 3

Horo Req(N) = Tn — 5

Id ECU Req(N) — 7

Extrc Tth(ECU) — 9

DB — 11

Extrc Req(N-1) = Tn-1 — 13

Tth(ECU) > Tn-Tn-1 — 15

Y

Cnt(ECU) ← Cnt(ECU) + 1 — 19

Cnt(ECU)>Max(ECU) — 21

ALERT

Y

9

[Fig 2]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2015346797 A1

**Littérature non-brevet citée dans la description**

- **HOANG PHUONG**. An Online Degradation Forecasting and Abatement Framework for Hybrid Electric Vehicles. *SAE 2010 Commercial Vehicle Enguneering Congress SAE Technical Papers*, 13 April 2021, vol. 1, ISSN 0148-7191, http://dx.doi.org/104271/2021-01-0161